# EUROPEAN PATENT APPLICATION

(11) **EP 4 498 649 A1**
(43) Date of publication of application: **29.01.2025**
(21) Application number: 24190199.0
(22) Date of filing: 23.07.2024
(51) Int. Cl.: H04L 41/0873, H04L 41/28, H04L 43/00

(54) **DEVICE MANAGEMENT SYSTEM, DEVICE MANAGEMENT METHOD, AND STORAGE MEDIUM**

(30) Priority: 28.07.2023 JP 2023123016; 02.05.2024 JP 2024074964
(71) Applicant: CANON KABUSHIKI KAISHA, Tokyo 146-8501 (JP)
(72) Inventor: YOSHIOKA, Migaku, Tokyo (JP)
(74) Representative: WESER & Kollegen Patentanwälte PartmbB

(57) **Abstract**

In a device management system, if access information that has been newly acquired from a device management server differs from access information managed by a management client, the newly acquired access information is saved only if identification information acquired using the access information newly acquired from the device management server matches identification information managed by the management client, and if a device aggregates communication by proxy, a proxy whitelist is updated. In addition, a network device has a transmission unit configured to transmit data of the network device to a monitoring device in order to transmit the data to the device management server.

## Description

### BACKGROUND OF THE INVENTION

### Field of the Invention

The present invention relates to a device management system, a device management method, a storage medium, and the like.

### Description of the Related Art

In the related art, device management systems in which maintenance of network devices (for example, image formation devices) installed in offices and the like is performed via a network are known. By using a device management system, for example, occurrence of a failure in devices, a need to replenish consumables, or the like can be detected via the network and a prompt response can be made.

Device management systems in the related art including a device management server that unitarily manages each of devices, and a monitoring device that operates as a management client and collects management information from a plurality of devices to be transferred to the device management server are known.

A user inputs access information such as an IP address or a hostname through a Web UI of the device management server, or identification information of the device such as a serial number or a MAC address of the device. Accordingly, the management client can regularly acquire device management information via the device management server and the devices can be monitored by the management client.

Japanese Patent Laid-Open No. 2004-48462 describes a system in which combinations of fixed identification information such as a MAC address and variable identification information such as an IP address of peripherals are managed and change in access information of the peripherals is recognized.

However, in many cases, a user who operates a cloud-based device management server differs from a user who operates a management client or a device in a client network, and there is a discrepancy in timing between the operations. For example, there may be cases in which a user of the device management server changes access information of a device, which has already been registered through a Web UI, in advance and a user of the device in the client network changes the access information afterward.

In the foregoing example, if the management client acquires the changed access information in the device management server and saves it in its own database before the access information of the device is changed, communication cannot be performed due to a mismatch of the IP address until the access information of the device is changed. Therefore, monitoring cannot be performed temporarily.

Moreover, regarding a constitution in which a management client aggregates and monitors devices via its own proxy function, there may be a constitution in which access information of access sources to a proxy function is managed in a form of a whitelist and communication from access sources that are not on the whitelist is blocked. In such a case, access information different from that of a current device may be added to the whitelist, thereby permitting communication from unauthorized access sources in the whitelist.

### SUMMARY OF THE INVENTION

According to an aspect of the present invention, a device management system has network devices, a monitoring device monitoring the network devices, and a device management server managing data transmitted from the monitoring device. The monitoring device has at least one processor or circuit configured to function as: an equipment search unit configured to acquire identification information for each of the network devices using access information of the network devices connected to a network, a management object reception unit configured to acquire the identification information and the access information of the network devices that are management objects from the device management server, a management unit configured to manage the identification information and the access information of the network devices, a first judgment unit configured to determine that the identification information managed by the management unit matches the identification information acquired by the management object reception unit and the access information managed by the management unit does not match the access information acquired by the management object reception unit, a second judgment unit configured to judge whether or not the identification information acquired by the equipment search unit using the access information acquired by the management object reception unit matches the identification information of the network device acquired by the management object reception unit, and a first updating unit configured to update the access information of the network device managed by the management unit if it is judged that the access information of the same network device does not match as a result of judgment by each of the first judgment unit and the second judgment unit. The network device has at least one processor or circuit configured to function as: a transmission unit configured to transmit data of the network device to the monitoring device in order to transmit the data to the device management server.

Further features of the present invention will become apparent from the following description of embodiments with reference to the attached drawings.

### BRIEF DESCRIPTION OF THE DRAWINGS

Fig. 1 is an overall view of a device management system according to First Embodiment of the present invention.
Fig. 2 is a block diagram showing an example of a hardware constitution of an image formation device 107 as a network device according to First Embodiment of the present invention.
Fig. 3 is a functional block diagram showing an example of an internal constitution of a monitoring device 106 and a server group 101-105 according to First Embodiment of the present invention.
Fig. 4 is a functional block diagram showing an example of a constitution of the image formation device 107 as a network device according to First Embodiment of the present invention.
Fig. 5 is a functional block diagram showing an example of a constitution of the monitoring device 106 according to First Embodiment of the present invention.
Fig. 6 is a flowchart showing an example of operation performed when a management object device list for the monitoring device 106 according to First Embodiment of the present invention is acquired.
Fig. 7A is a view showing an example of device management information managed by a device management server 101 according to First Embodiment of the present invention, and Fig. 7B is a view showing an example of device management information managed by the monitoring device 106.
Fig. 8 is a flowchart showing an example of operation in Step S612 in Fig. 6 in First Embodiment of the present invention.
Fig. 9 is a flowchart showing an example of operation performed when a management object device list for the monitoring device 106 according to Second Embodiment of the present invention is acquired.
Fig. 10 is a flowchart showing an example of operation of checking identification information of the monitoring device 106 according to Second Embodiment of the present invention.
Fig. 11 is a flowchart showing an example of operation in Step S612 in Fig. 6 in Third Embodiment of the present invention.
Fig. 12 is a flowchart showing an example of operation performed when the monitoring device 106 according to Fourth Embodiment of the present invention has received a power source state event transmitted from a device by multicast.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First Embodiment>

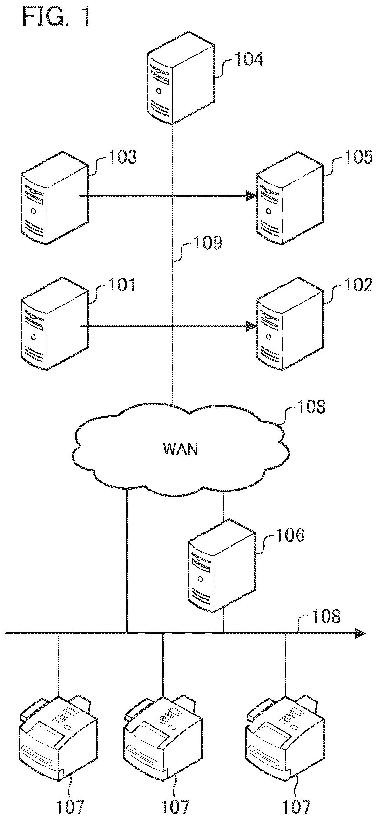

Hereinafter, an embodiment of the present invention will be described with reference to the drawings. Fig. 1 is an overall view of a device management system according to First Embodiment of the present invention. The device management system of Present Embodiment is a management system for image formation devices 107 (which will hereinafter be referred to as devices) serving as network devices. The network devices are not limited to image formation devices and may any devices as long as the devices can be connected to a network.

In addition, the device management system is constituted of a monitoring device 106 collecting data from the image formation devices 107; a server group managing data collected by the monitoring device 106, and the image formation devices 107 and the monitoring device 106 that are management objects and providing various kinds of service; and the like. That is, the device management system has the image formation devices 107, the monitoring device 106 monitoring the image formation devices 107, a device management server 101 managing data transmitted from the monitoring device 106, and the like.

The device management server 101 manages information of the image formation devices 107 and the monitoring device 106 that are targets for various kinds of service. An authentication/authorization server 102 provides functions of authentication and authorization for safely connecting the image formation devices 107 and the monitoring device 106 to various servers.

In Present Embodiment, utilizing a general OAuth structure, each piece of the equipment (the image formation devices 107, the monitoring device 106, and the like) is registered as a client associated with a particular tenant. Here, a tenant indicates a management unit assigned to each client who has signed a service utilization contract.

The authentication/authorization server 102 of Present Embodiment performs management of data on a tenant basis. In addition, the authentication/authorization server 102 issues a token to the clients. Each piece of the equipment (the image formation devices 107, the monitoring device 106, and the like) can access various servers utilizing this token.

A resource server 103 mainly manages information, which is necessary when service is provided, collected from the image formation devices 107. In response to a request from each piece of the equipment (the image formation devices 107, the monitoring device 106, and the like), an access destination device management server 104 provides the URL of the device management server 101, the resource server 103, or the like that is an access destination of each piece of the equipment.

A service provision server 105 provides various kinds of service such as maintenance service and reporting service on the basis of various kinds of information of the image formation devices 107 managed by the resource server 103. A user can set information of each piece of the equipment (the image formation devices 107, the monitoring device 106, and the like) that he/she desires to manage through a Web UI of the service provision server 105.

In the service provision server 105, information of each piece of the equipment set by a user can also be reflected in the device management server 101 and the resource server 103. The server group (101 to 105), the monitoring device 106, and the image formation devices 107 are connected to a network (a WAN 108 or a LAN 109).

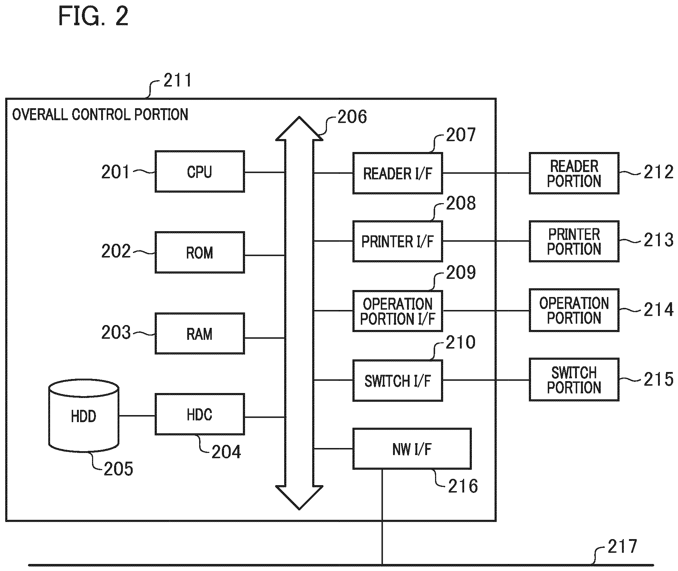

Fig. 2 is a block diagram showing an example of a hardware constitution of the image formation device 107 as a network device according to First Embodiment of the present invention. A CPU 201 executes a computer program, which is stored in a ROM 202 or a hard disk (HDD) 205 and used for controlling all the devices, and comprehensively controls each of the devices connected to a system bus 206.

A RAM 203 functions as a work area or the like for the CPU 201. An HDC 204 is a hard disk controller controlling the HDD 205. A reader I/F 207 and a printer I/F 208 are respectively connected to a reader portion 212 and a printer portion 213 and control these devices.

An operation portion I/F 209 is connected to an operation portion 214 and controls display on the operation portion 214 and a user input from the operation portion 214. The reference sign 214 indicates an operation portion and is constituted of buttons, a display portion, and the like for an operation. A switch I/F 210 is connected to a switch portion 215 and controls an operation from the switch portion 215.

The reference sign 215 indicates a switch portion and is constituted of a switch and the like for an operation. The reference sign 216 indicates a network I/F (NW I/F) and exchanges data with external devices such as a host computer via a network 217.

An overall control portion 211 is a part that controls various devices and interfaces connected to the devices (the image formation devices 107) and controls operation of all the devices. The reader portion 212 functions as a scanner, reads an image of a manuscript, and outputs image data corresponding to the manuscript image to the printer portion 213 in accordance with an instruction from a user or saves it in a storage device of the device.

Moreover, the reader portion 212 can also transmit the foregoing image data to the host computer connected to the network 217 via the network I/F 216. The printer portion 213 functions as a printer and prints a manuscript read by the reader portion 212 and image data stored in the HDD 205 serving as a storage device inside the device main body.

Moreover, the printer portion 213 receives a print job from the host computer connected to the network 217 via the network I/F 216 and prints it. The network I/F 216 is connected via the network 217 and used by the overall control portion 211 for mutual communication with other information equipment on the network 217.

The operation portion 214 displays information from the overall control portion 211 for a user and notifies the overall control portion 211 of a user's input through buttons and a display device, a LCD screen with a touch panel for inputting, or a combination thereof. The switch portion 215 controls the ON/OFF state of a power source of the overall control portion 211.

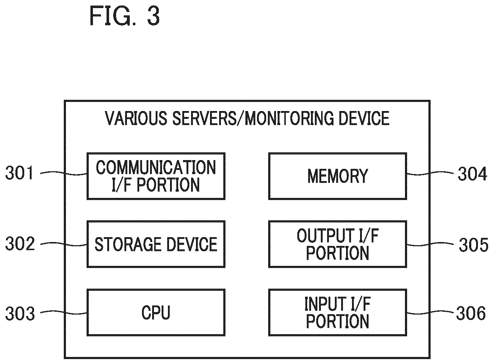

Fig. 3 is a functional block diagram showing an example of an internal constitution of the monitoring device 106 and the server group (101 to 105) according to First Embodiment of the present invention. Some of the functional blocks shown in Fig. 3 are realized by the CPU or the like serving as a computer included in each of the devices and executes a computer program stored in a memory serving as a storage medium.

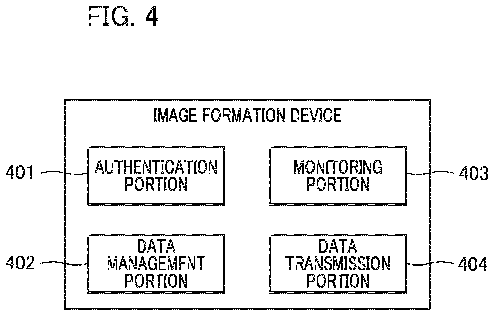

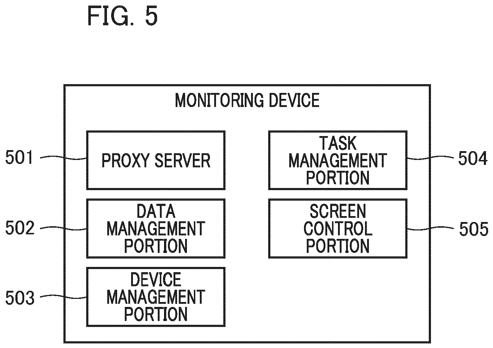

However, some or all of them may be realized by hardware. A dedicated circuit (ASIC), a processor (a reconfigurable processor, DSP), or the like can be used as the hardware. In addition, each of the functional blocks shown in Fig. 3 does not have to be built into the same casing and may be constituted as separate devices connected to each other via a signal channel. The foregoing description related to Fig. 3 also applies to Figs. 4 and 5 in a similar manner.

A communication I/F portion 301 is a network interface for communication with external systems and the external devices. A storage device 302 stores an operating system (OS), a computer program, management data, and data and the like collected from external systems, devices, and the like.

A CPU 303 serving as a computer loads a computer program from the storage device 302 in a memory 304 and executes it. An output I/F portion 305 is connected to an output device such as a display and outputs execution results of the computer program and the like. An input I/F portion 306 is connected to a keyboard, a pointing device, or the like and receives a user's operation input.

Fig. 4 is a functional block diagram showing an example of a constitution of the image formation device 107 as a network device according to First Embodiment of the present invention. An authentication portion 401 communicates with the authentication/authorization server 102, performs registration processing as a client, acquires and manages the tokens, and the like. The authentication portion 401 communicates with the monitoring device 106 regarding setting necessary for monitoring including registration in the authentication/authorization server 102.

A data management portion 402 manages data for setting a proxy server and the like of the monitoring device 106. A monitoring portion 403 collects data and the like necessary for monitoring. A data transmission portion 404 transmits data collected by the monitoring portion 403 to the resource server 103.

Fig. 5 is a functional block diagram showing an example of a constitution of the monitoring device 106 according to First Embodiment of the present invention. A proxy server 501 aggregates communication from the image formation devices 107 having a self-registration function and a self-monitoring function.

In Present Embodiment, the proxy server 501 is built into the monitoring device 106, but it may be provided outside the monitoring device 106. In addition to this proxy server 501, another proxy server may be provided in a communication path between the image formation devices 107 and the WAN 108 to establish a multi-stage proxy.

A data management portion 502 manages device information necessary for monitoring, such as status information indicating whether or not the device is a management object of itself. Here, the data management portion 502 functions as a management unit executing a managing step of managing identification information and access information of the image formation device.

A device management portion 503 collects information from the image formation devices 107, and it also sets proxy server information retained by itself, performs registration processing as a client, acquires and manages the tokens, and the like with respect to the image formation devices 107.

Here, the device management portion 503 functions as an equipment search unit executing an equipment searching step of acquiring the identification information for each of the image formation devices using the access information of the image formation devices connected to the network.

A task management portion 504 performs a task of acquiring a list of devices that have been registered in advance as the management objects of the monitoring device 106 (which will hereinafter be referred to as a management object device list) from the device management server 101, instructs the monitoring device 106 to perform self-registration, and monitors the devices. Moreover, the task management portion 504 also manages various tasks and the like, such as registration of devices having no self-registration function.

In self-registration of the monitoring device 106, a token is acquired by registering the monitoring device 106 itself in the authentication/authorization server 102, and the URL of various servers is acquired from the access destination device management server 104 using the token. In addition, a communication test is performed with respect to various servers.

A screen control portion 505 causes the output device to display an image via the output I/F portion 305 and saves input information from an input device via the input I/F portion 306 in the data management portion 502. The functional blocks (functional modules) shown as an example in the blocks in Fig. 5 are realized by the CPU 303 executing a predetermined computer program as described above.

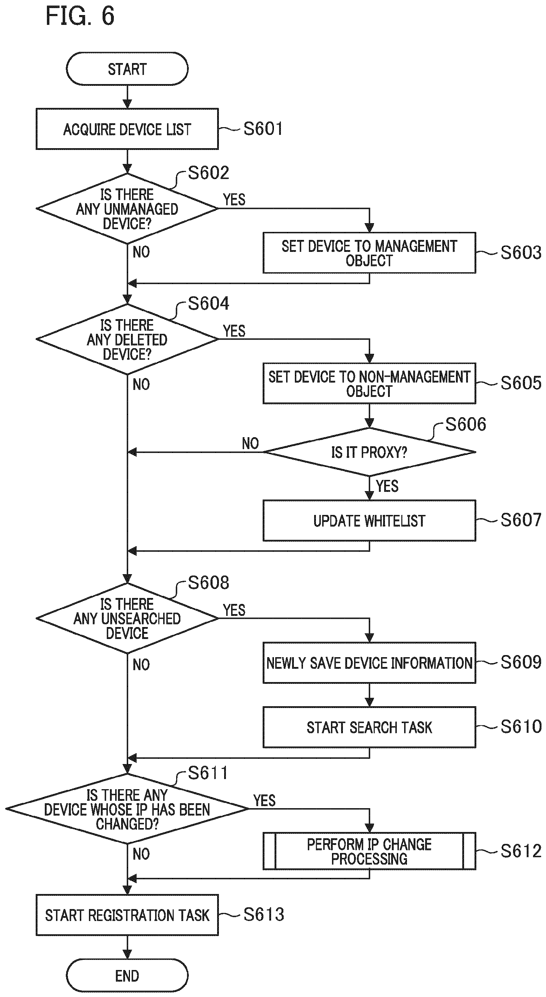

In addition, each step of the processing of the monitoring device 106 in the flowcharts shown in Figs. 6 and 8 to 11 (which will be described below) is realized by executing the foregoing computer program.

Fig. 6 is a flowchart showing an example of operation performed when the management object device list for the monitoring device 106 according to Example of the present invention is acquired. The operation of each step of the flowchart in Fig. 6 is sequentially performed when the CPU or the like serving as a computer inside the monitoring device 106 executes the computer program stored in the memory.

As will be described below, in the processing in Fig. 6, the monitoring device 106 acquires information of the devices managed by the monitoring device 106 from the device management server 101 and updates the device information.

The processing in Fig. 6 may be regularly executed by the task management portion, may be regularly executed on the basis of a schedule set in the screen control portion 505 or a configuration file by a user, or may be executed at an arbitrary timing by a user through an operation of the screen control portion 505.

In Step S601, the task management portion 504 acquires management information of the devices managed by the monitoring device 106 from the device management server 101 using the token acquired from the authentication/authorization server 102 through self-registration processing of the monitoring device 106.

Step S601 functions as a management object receiving step (management object reception unit) acquiring the identification information and the access information of the image formation devices that are management objects from the device management server. Here, management information of the devices managed by the device management server 101 and the monitoring device 106 will be described.

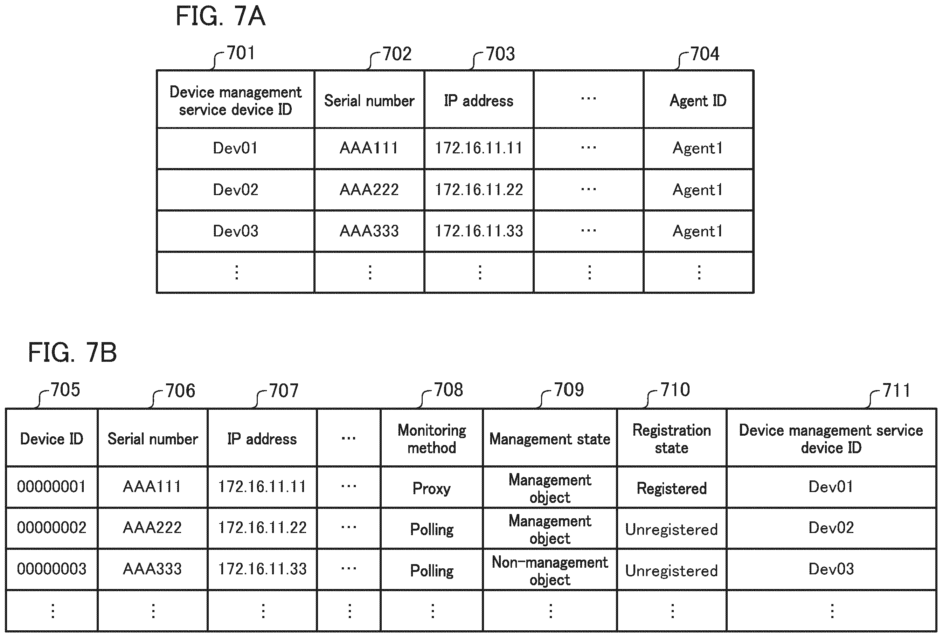

Fig. 7A is a view showing an example of device management information managed by the device management server 101 according to First Embodiment of the present invention, and Fig. 7B is a view showing an example of device management information managed by the monitoring device 106.

In Fig. 7A, a device management service device ID 701 is information for uniquely identifying the image formation device 107 as a device in the device management server 101. The serial number 702 is information for uniquely identifying the device, and it is fixed identification information retained in the image formation device 107 in advance.

An IP address 703 is information indicating the IP address of the device. Here, the IP address is used as an example of access information with respect to the device, but a hostname, a URL, or the like may also be used.

An agent ID 704 is information allowing the device management server 101 to uniquely identify the monitoring device 106. If the device management server 101 receives an acquisition request for a management object device list from the monitoring device 106, it refers to an agent ID included in the acquisition request and returns management information of the device associated with the agent ID to the monitoring device 106.

In Fig. 7B, a device ID 705 is information for uniquely identifying the device in the monitoring device 106. The serial number 706 is information for uniquely identifying the device. An IP address 707 is information indicating the IP address of the device. Here, the IP address is used as an example of access information with respect to the device, but a hostname, a URL, or the like may also be used.

A monitoring method 708 is information indicating whether or not it is a device that aggregates communication in the proxy server 501 using the self-registration function and the self-monitoring function of the device (whether it is a device using polling). A management state 709 is information indicating whether or not it is a device that will become "management object" of this system. Here, the image formation device 107 included in the list is judged as "management object" by acquiring the management object device list.

A registration state 710 is information indicating whether or not the image formation device 107 that is "management object" could have been normally registered. A device management service device ID 711 is information allowing the device management server 101 to uniquely identify the image formation device 107. Naturally, management information of the device is not limited thereto.

Here, description will return to the flowchart. In Step S602, the task management portion 504 checks whether there is any device that has not yet become "management object". More specifically, the serial number 702 in the management object device list is compared with the serial number 706 in the device management information managed by the data management portion 502 of the monitoring device 106.

Further, it is checked whether there is any device whose serial number matches but whose management state 709 is "non-management object". If there is such a device, the processing proceeds to Step S603. If there is no such a device, the processing proceeds to Step S604.

In Step S603, the task management portion 504 sets the management state 709 of the device whose serial number matches but whose management state 709 is "non-management object" to "management object" and saves this in the data management portion 502.

At this time, if there is any information, which is not in the device management information of the monitoring device 106, in management information common to the management object device list and the device management information of the monitoring device 106, it is adopted and saved in the data management portion 502. Examples of common management information include the device management service device ID 701 and the IP address 703.

In Step S604, the task management portion 504 checks whether or not there is any device that needs to be deleted from the management object. Specifically, the serial number 702 of each of the devices in the management object device list is compared with the serial number 706 of each of the devices in the device management information managed by the data management portion 502 of the monitoring device 106.

Further, it is checked whether there is any device whose management state 709 is "management object" among the devices having a serial number that is not in the acquired management object device list but is in the device management information managed by the data management portion 502 of the monitoring device 106. If there is such a device, it is determined that there is a deletion device that needs to be deleted from "the management object", and the processing proceeds to Step S605. If there is no such a device, the processing proceeds to Step S608.

In Step S605, the task management portion 504 changes the management state 709 of the foregoing deletion device to "non-management object". That is, a device whose management state 709 is "management object" is searched for among the devices having a serial number that is not in the acquired management object device list but is in the device management information managed by the data management portion 502 of the monitoring device 106. Further, the management state 709 of the device is changed and set to "non-management object" and saved in the data management portion 502.

In Step S606, if there is a device whose monitoring method 708 is "proxy" among the devices set to "non-management object" in Step S605, the task management portion 504 proceeds to Step S607. If there is no such a device, the processing proceeds to Step S608.

In Step S607, the task management portion 504 registers the IP address 707 of the device whose management state 709 is "management object" in the device management information managed by the data management portion 502 in a whitelist of the proxy server 501 and updates it. The proxy server 501 permits access from the IP address registered in the updated whitelist and blocks access from other IP addresses.

In Step S608, the task management portion 504 checks whether or not there is any unsearched device. That is, the serial number 702 of each of the devices in the management object device list is compared with the serial number 706 of each of the devices in the device management information managed by the data management portion 502 of the monitoring device 106.

Further, it is checked whether or not there is any device, which has a serial number that is in the management object device list but is not in the device management information managed by the data management portion 502 of the monitoring device 106, within the management object device list. If there is such a device, it is determined that there is an unsearched device, and the processing proceeds to Step S609. If there is no such a device, the processing proceeds to Step S611.

In Step S609, the task management portion 504 saves the device management information of the unsearched device (that is, the device that needs to be newly searched for) in the management object device list in the data management portion 502. Moreover, the management state 709 of the device is set to "management object" and saved in the data management portion 502.

In Step S610, the task management portion 504 starts a search task for an unsearched device (that is, a device that needs to be newly searched for) in Step S609. In the search task, a request for searching with respect to the IP address 707 in the device management information is transmitted, and if there is a response, information such as a serial number is acquired.

If a user has set an IP address or a hostname for searching in advance in the screen control portion 505, a search may be performed for these.

In Step S611, the task management portion 504 compares the serial number 702 in the acquired management object device list with the serial number 706 in the device management information managed by the data management portion 502 of the monitoring device 106.

Further, if there is a device whose serial number matches but the individual IP address differs, it is determined that there is a device whose IP has been changed (IP-changed device), and the processing proceeds to Step S612. If there is no such a device, the processing proceeds to Step S613.

Here, Step S611 functions as a first judging step (first judgment unit). In addition, in Step S611, if the identification information managed by the management unit matches the identification information acquired by the management object reception unit, and if the access information managed by the management unit does not match the access information acquired by the management object reception unit, Yes is determined.

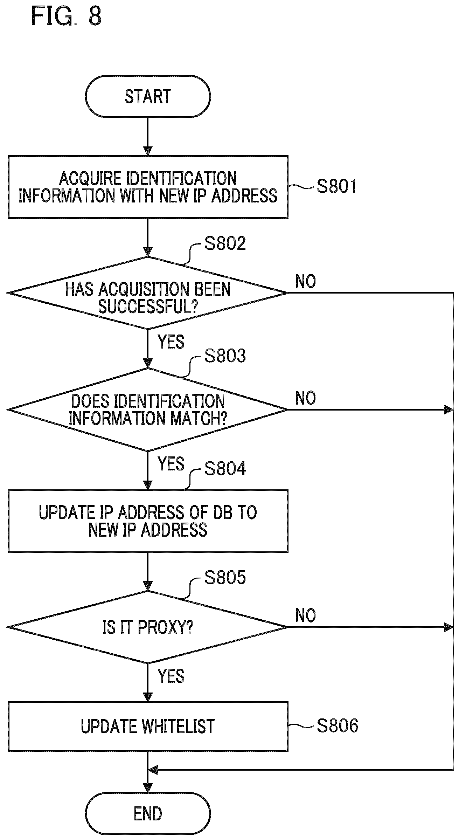

In Step S612, the processing of the flowchart in Fig. 8 (which will be described below) is executed, and then in Step S613, the task management portion 504 starts a registration task of the device. The execution target of the registration task is a device whose management state 709 is "management object".

In the registration task, first, it is checked whether the device has the self-registration function and the self-monitoring function. Further, if communication aggregated through the proxy server 501 is possible, the monitoring method 708 is set to "proxy", and the IP address is added to the whitelist of the proxy server 501. If communication aggregated through the proxy server 501 is not possible, it is set to "polling".

Further, for a device having the self-registration function, the device management portion 503 sets proxy information of the proxy server 501 with respect to the authentication portion 401 of the device and instructs the device to perform self-registration. For a device having no self-registration function, the task management portion 504 performs registration of the device by proxy and requests registration to the authentication/authorization server 102. If the registration is completed, the registration state 710 is set to "registered" and saved in the data management portion 502.

Fig. 8 is a flowchart showing an example of operation in Step S612 in Fig. 6 in First Embodiment of the present invention. The operation of each step of the flowchart in Fig. 8 is sequentially performed when the CPU or the like serving as a computer inside the monitoring device 106 executes the computer program stored in the memory.

In Fig. 8, if a new IP address that has been newly acquired from the device management server differs from the IP address managed by the monitoring device, the new serial number acquired from the device is compared with the serial number 702 managed by the monitoring device 106 using the new IP address. Further, the new serial number is saved only if the comparison results in a match. Moreover, if the monitoring method 708 is "proxy", the whitelist is updated.

In Step S801, the device management portion 503 acquires a serial number serving as the identification information from the device using the IP address 703 serving as the new IP address that has been newly acquired from the management object device list. In Step S802, the task management portion 504 determines whether a serial number has been successfully acquired in Step S801. If it has been successful, the processing proceeds to Step S803.

If it has not been successful, the flow in Fig. 8 ends. For example, if the power source of the device is turned off, if authentication information for communication with the device is incorrect, if there is no device performing communication using the newly acquired IP address 703, or the like, communication will fail, and No is determined in Step S802.

In Step S803, the task management portion 504 determines whether or not the serial number serving as the identification information acquired in Step S801 matches the serial number 702 in the management object device list.

Here, Step S803 functions as a second judging step (second judgment unit). In addition, in Step S803, it is judged whether or not the identification information acquired by the equipment search unit using the access information acquired by the management object reception unit matches the identification information of the image formation device acquired by the management object reception unit.

If Yes is determined in Step S803, it is judged that the IP address of the same device has been changed, and the processing proceeds to Step S804. If No is determined in Step S803, that is, if the serial number serving as the identification information does not match, the flow in Fig. 8 ends.

In Step S804, the task management portion 504 overwrites the IP address 707 of the data management portion 502 with the IP address 703 that has been newly acquired from the management object device list serving as database (DB) and saves it. That is, the IP address in the management object device list serving as the database is updated to the new IP address.

Here, Step S804 functions as a first updating step (first updating unit). In addition, in Step S804, if it is judged that the access information of the same image formation device does not match as a result of judgment by each of the first judgment unit and the second judgment unit, the access information of the image formation device 107 managed by the management unit is updated.

Next, in Step S805, the task management portion 504 determines whether or not the monitoring method 708 of the corresponding device is "proxy" and the management state 709 is "management object", and in the case of Yes, the processing proceeds to Step S806. If No is determined in Step S805, the flow in Fig. 8 ends.

In Step S806, the task management portion 504 updates the whitelist of the proxy server 501 and performs setting such that the IP address 707 of the corresponding device is permitted.

That is, if the access information that has been newly acquired from the device management server 101 differs from the access information managed by the monitoring device 106, the identification information acquired using the access information that has been newly acquired from the device management server is compared with the identification information managed by a management client. Further, the newly acquired access information is saved only if the identification information matches. In addition, as necessary, the whitelist is also updated.

In addition, if the monitoring method 708 of the device is not "proxy" and the network devices are being monitored without utilizing the function of the proxy server, the whitelist is not updated. Here, when the access information is updated by the first updating unit, Step S806 functions as a second updating unit that updates an access permission list of the image formation devices 107 with respect to the proxy server 501.

By performing processing in this manner, if the access information retained in the device management server 101 differs from the access information retained in the monitoring device 106 in advance, it is possible to access the device using the correct access information.

### <Second Embodiment>

### <Second Embodiment>

In the foregoing First Embodiment, if the power source of the device is turned off at the timing if a device list is acquired, the serial number cannot be confirmed so that the IP address cannot be updated. If a user executes acquisition of the device list by operating the Web UI, acquisition of the device list may be executed again after the power source of the device is turned on. However, in the case of regularly executed acquisition of the device list, the IP address is not updated until the power source of the device is turned on at the next timing and thereafter.

In addition, there may be cases in which it is desired to change the IP address in the management information managed by the device management server 101 first and change the IP address of the device thereafter. At this time, even if a change in IP address is detected if the device list is acquired, if the actual IP address of the device has not changed at this point of time, the device cannot be monitored until acquisition of the device list is executed after the actual IP address of the device is changed.

Second Embodiment is constituted such that the device can be continuously monitored even in such a case. Hereinafter, Second Embodiment of the present invention will be described with reference to the drawings. Description of the same constitutions as those in First Embodiment will be omitted.

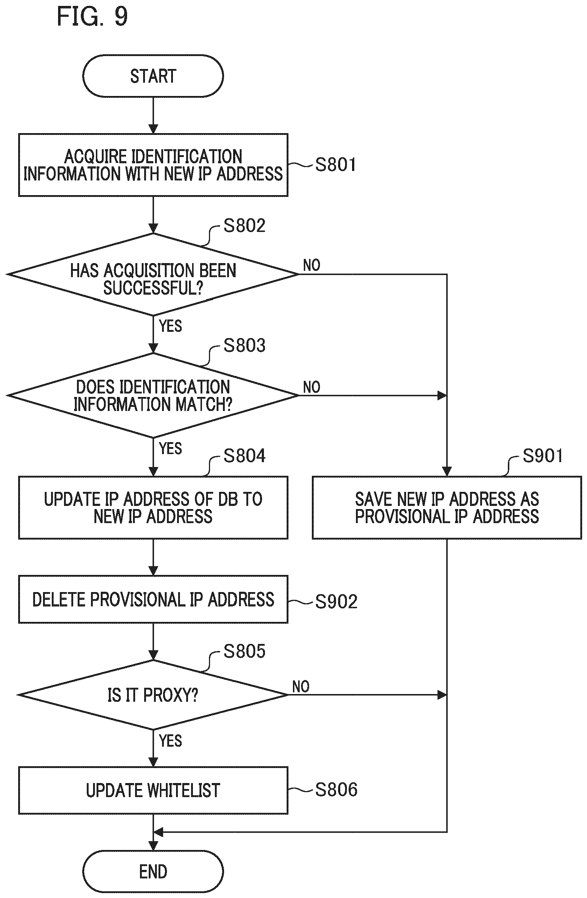

Fig. 9 is a flowchart showing an example of operation performed when a management object device list for the monitoring device 106 according to Second Embodiment of the present invention is acquired. The operation of each step of the flowchart in Fig. 9 is sequentially performed when the CPU or the like serving as a computer inside the monitoring device 106 executes the computer program stored in the memory.

In the flowchart in Fig. 9, the processing of Step S901 is performed if it is judged in Step S802 that the monitoring device 106 in First Embodiment has failed to acquire the identification information or if it is judged in Step S803 that the identification information does not match.

That is, if it is determined in Step S802 that acquisition of the serial number has failed, or if it is judged in Step S803 that the serial number serving as the identification information does not match the serial number 702 in the management object device list, the processing proceeds to Step S901.

In Step S901, the data management portion 502 saves the serial number acquired from the management object device list in the data management portion 502 as a provisional IP address. This provisional IP address is saved as device management information separately from the IP address 707 in the device management information.

That is, in Step S901, if the second judgment unit judges that the identification information does not match, the access information acquired by the management object reception unit is saved in the management unit as provisional access information.

Meanwhile, after the IP address is updated in Step S804, the provisional IP address is deleted in Step S902. That is, in Step S902, if there is a provisional IP address for the device whose serial number serving as the identification information has matched in Step S803, the data management portion 502 deletes it.

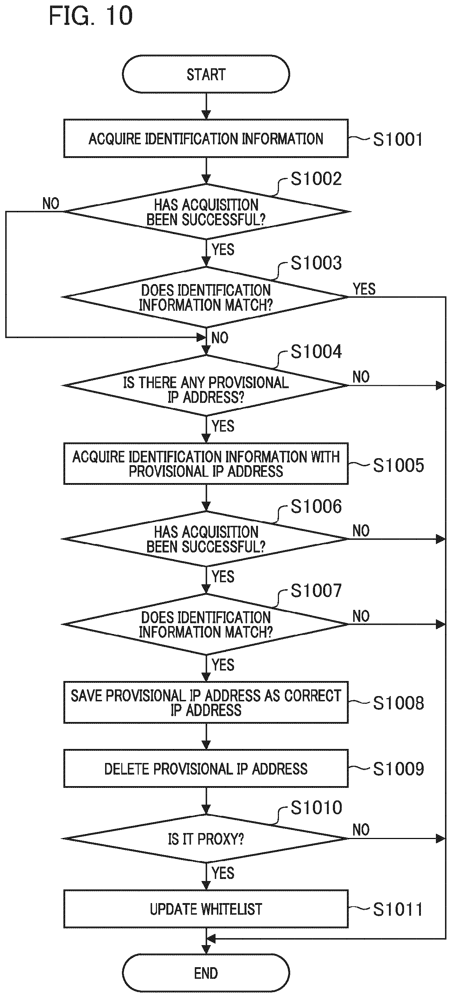

In this manner, after the IP address 703 in the management object device list is changed, if a combination of the changed IP address and the identification information (serial number) cannot be confirmed, the changed IP address is saved as the provisional IP address. Further, at the beginning of various tasks in the task management portion 504, as necessary, a combination of the provisional IP address and the identification information (serial number) is confirmed using the flow shown in Fig. 10, for example.

Fig. 10 is a flowchart showing an example of operation of checking identification information of the monitoring device 106 according to Second Embodiment of the present invention. The operation of each step of the flowchart in Fig. 10 is sequentially performed when the CPU or the like serving as a computer inside the monitoring device 106 executes the computer program stored in the memory.

In the flow in Fig. 10, if a combination of the serial number serving as the identification information and the IP address does not match, or if a communication error has occurred, if a combination of the provisional IP address and the serial number serving as the identification information matches, the IP address is updated. The processing in Fig. 10 is executed by the task management portion 504 as necessary at the beginning of various tasks in the task management portion 504 at a predetermined timing after the processing of the flow in Fig. 9.

In Step S1001, the device management portion 503 acquires the identification information (serial number) from the device using the IP address 707 in the device management information of the monitoring device 106.

In Step S1002, the task management portion 504 judges whether acquisition in Step S1001 has been successful. If it has been successful, the processing proceeds to Step S1003. If it has failed, the processing proceeds to Step S1004.

In Step S1003, the task management portion 504 judges whether the identification information (serial number) acquired in Step S1001 matches the serial number 706 in the device management information of the monitoring device 106. If it matches, the flow in Fig. 10 ends. If it does not match, the processing proceeds to Step S1004.

In Step S1004, the task management portion 504 judges whether there is any provisional IP address saved in Step S901. If there is such an address, the processing proceeds to Step S1005. If there is no such an address, the flow in Fig. 10 ends.

In Step S1005, the device management portion 503 acquires the identification information (serial number) from the device using the provisional IP address saved in Step S901. That is, if communication with the image formation device 107 using the access information managed by the management unit fails, the identification information is acquired based on the provisional access information. Alternatively, if the identification information acquired using the access information managed by the management unit differs from the identification information managed by the management unit, the identification information is acquired based on the provisional access information.

In Step S1006, the task management portion 504 judges whether the identification information (serial number) has been successfully acquired in Step S1005. If it has been successful, the processing proceeds to Step S1007. If it has failed, the flow in Fig. 10 ends.

In Step S1007, the task management portion 504 judges whether the identification information (serial number) acquired in Step S1005 matches the serial number 706 in the device management information of the monitoring device 106.

If it matches, the processing proceeds to Step S1008. If it does not match, the flow in Fig. 10 ends. If the identification information (serial number) does not match in Step S1007, the screen control portion 505 may notify a user that neither the IP address 707 in the device management information nor the provisional IP address matches the identification information (serial number).

In Step S1008, the data management portion 502 overwrites the IP address 707 in the device management information with the provisional IP address and saves it. That is, if the identification information acquired based on the provisional access information matches the identification information managed by the management unit, the access information managed by the management unit is overwritten with the provisional access information and saved. In Step S1009, the data management portion 502 deletes the provisional IP address.

In Step S1010, if the monitoring method 708 of the device is "proxy" and the management state 709 is "managed state", the task management portion 504 proceeds to Step S1011. Otherwise, the flow in Fig. 10 ends. In Step S1011, the task management portion 504 performs setting such that the IP address 707 of the device is permitted in the whitelist of the proxy server 501.

As described above, after the IP address 703 in the management object device list is changed, if a combination of the changed IP address and the identification information (serial number) cannot be confirmed, the changed IP address is saved as the provisional IP address. Further, at the beginning of various tasks in the task management portion 504, as necessary, a combination of the provisional IP address and the identification information (serial number) is confirmed.

Accordingly, even if a change in IP address cannot be reflected at the time of acquiring the management object device list, the device can be continuously monitored.

### <Third Embodiment>

### <Third Embodiment>

In the foregoing First Embodiment and Second Embodiment, a method, in which devices are monitored using either the correct IP address if the IP address 703 in the management information managed by the device management server 101 differs from the IP address 707 managed by the monitoring device 106, has been described.

Meanwhile, if the IP address 703 in the management information managed by the device management server 101 is not appropriate, monitoring will stop if the IP address of the device does not match the IP address 707 managed by the monitoring device 106.

Here, in Third Embodiment, if the IP address 703 in the management information managed by the device management server 101 is not appropriate, a user is prompted to reset the IP address. Hereinafter, another embodiment of the present invention will be described with reference to the drawings. Description of the same constitutions as those in First Embodiment will be omitted.

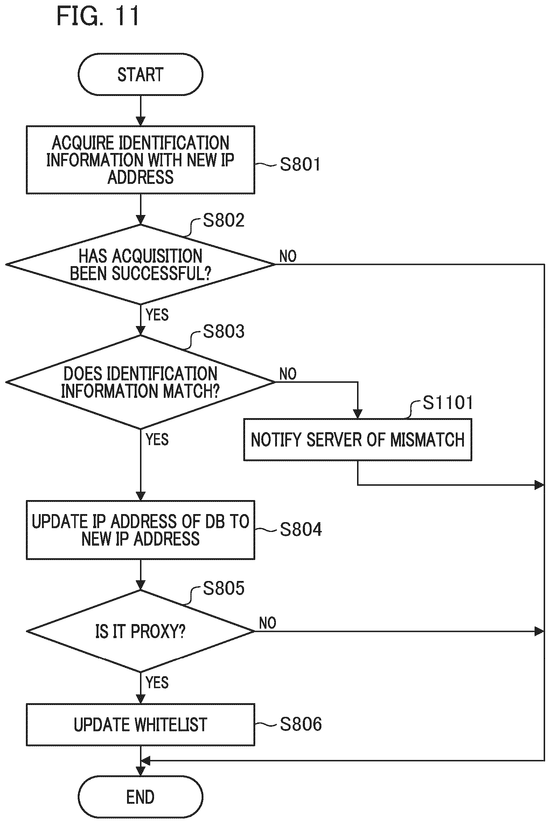

Fig. 11 is a flowchart showing an example of operation in Step S612 in Fig. 6 in Third Embodiment of the present invention. The operation of each step of the flowchart in Fig. 11 is sequentially performed when the CPU or the like serving as a computer inside the monitoring device 106 executes the computer program stored in the memory.

In Step S1101, if the identification information (serial number) acquired in Step S801 does not match the serial number 702 in the management object device list, the resource server 103 is notified that the IP address of the corresponding device is inappropriate.

That is, if the second judgment unit determines that the identification information does not match, a user is notified that the access information is inappropriate. At the time of this notification, the identification information (serial number) acquired in Step S801 is also notified together therewith.

The resource server 103 notifies the service provision server 105 of the received IP address mismatch information. Further, when a user refers to the device management information through the Web UI of the service provision server 105, the identification information (serial number) of the device that is currently associated with this IP address is displayed along with a message indicating a probability of inappropriate IP address information that has been set.

Here, a notification is issued to the resource server 103, but it may also be issued to the device management server 101 or the service provision server 105. In addition, a notification may be issued to a user by e-mail or the like or may be displayed in the screen control portion 505 of the monitoring device 106.

In addition, before a notification of a mismatch is issued in Step S1101, the identification information (serial number) is acquired using the unchanged IP address 707 retained in the data management portion 502. Further, if the identification information (serial number) matches the serial number 706, it may be judged that an operation of changing the IP address of the device has not yet been performed, and a notification of a mismatch does not have to be issued.

As described above, if the acquired identification information (serial number) does not match the serial number 702 in the management object device list, a user is notified of a probability that the IP address of the corresponding device will not be appropriate. Accordingly, the user can be prompted to reset the IP address.

In the foregoing Examples, if the access information of a plurality of devices managed by the device management server has changed, the access information is adopted after confirming that the access information is correct, when the management client acquires the device information in the device management server.

That is, if the access information that has been newly acquired from the device management server differs from the access information managed by the management client, the identification information is acquired using the access information that has been newly acquired from the device management server.

Further, the newly acquired access information is saved and the whitelist is also updated only if the acquired identification information matches the identification information managed by the management client. Accordingly, if the access information retained in the device management server differs from the access information retained in the management client, it is possible to access the device using the correct access information.

### <Fourth Embodiment>

In the foregoing Second Embodiment, a method, in which devices are continuously monitored even if a change in IP address cannot be reflected at the time of acquiring the management object device list of the devices by reflecting a change in IP address at the beginning of various tasks, has been described.

However, if the frequency of execution of various tasks attempting reflection of the IP address is low, there will be a period during which monitoring is not available from when the power source of the device is turned on until the next task is executed. In addition, if the monitoring method 708 of the device is "proxy", the management client does not frequently access the device, and therefore it takes time for the IP address to be reflected.

On the other hand, if various tasks are performed very frequently to increase the frequency of attempts for reflection of the IP address and shorten the period during which monitoring is not available, a load is applied to the CPU, and therefore the performance will be affected. Moreover, when the power source of the device is turned off, the time required to wait for a communication timeout doubles due to access to both the IP address 707 in the device management information and the provisional IP address, and therefore a load on the network also increases.

Fourth Embodiment is constituted so as to prevent occurrence of a period during which monitoring is not available while an influence on the performance is minimized even in such a case. Hereinafter, Fourth Embodiment of the present invention will be described with reference to the drawings. Description of the same constitutions as those in Second Embodiment will be omitted.

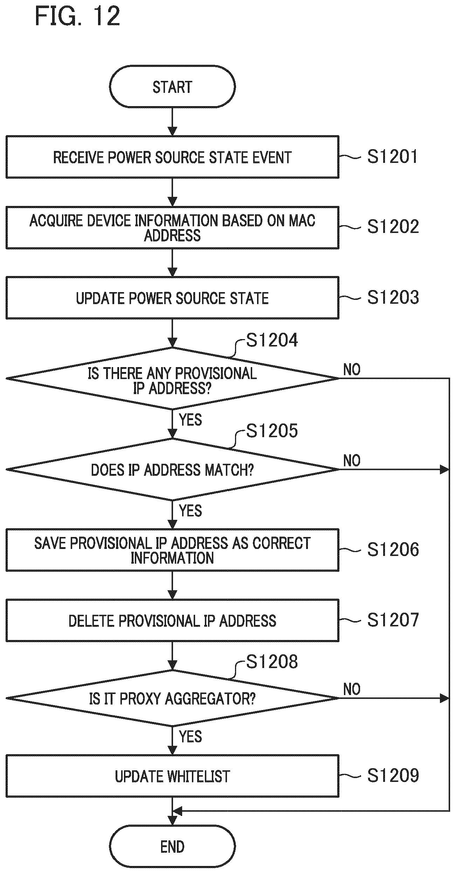

Fig. 12 is a flowchart showing an example of operation performed when the monitoring device 106 according to Fourth Embodiment of the present invention has received a power source state event transmitted from a device by multicast. The operation of each step of the flowchart in Fig. 12 is sequentially performed when the CPU or the like serving as a computer inside the monitoring device 106 executes the computer program stored in the memory.

Here, a power source state event indicates a packet that is transmitted from the data transmission portion 404 of the device by multicast when the power source state of the device (being turned on, in execution, sleep transition, sleep return, being turned off, or the like) has changed. The packet of the power source state event includes information of the power source state, the IP address, the MAC address, and the like.

In the flowchart in Fig. 12, after the provisional IP address is saved when the management object device list for the monitoring device 106 according to Second Embodiment is acquired, the power source state event is transmitted due to a change in power source state of the device, and the processing of Step S1201 is performed if the monitoring device 106 receives the power source state event.

In Step S1201, the task management portion 504 receives a power source state event through a power source state event receiving task of waiting for the power source state event.

In Step S1202, on the basis of the MAC address included in the power source state event received in Step S1201, the task management portion 504 acquires information of the device having a matching MAC address from the data management portion 502. Here, the MAC address is used as unique identification information of the device, but other identification information such as a serial number may be used.

In Step S1203, the task management portion 504 saves the power source state, which is included in the power source state event received in Step S1201, in the data management portion 502.

In Step S1204, the task management portion 504 judges whether there is the provisional IP address that has been saved in Step S901. If there is such an address, the processing proceeds to Step S1205. If there is no such an address, the flow in Fig. 12 ends. Here, the IP address is used as access information of the device, but other access information such as a hostname may be used.

In Step S1205, the task management portion 504 judges whether the IP address included in the power source state event received in Step S1201 matches the provisional IP address.

If it matches, the processing proceeds to Step S1206. If it does not match, the flow in Fig. 12 ends. Here, since it has been confirmed in Step S1202 that the identification information (MAC address) of the device matches, it is judged that the device is the same device, and a change in IP address is confirmed. Therefore, in Fourth Embodiment, there is no need to perform processing of acquiring information from the device anew as in First Embodiment and Second Embodiment.

In Step S1206, the data management portion 502 overwrites the IP address 707 in the device management information with the provisional IP address and saves it. That is, if the identification information acquired based on the provisional access information matches the identification information managed by the management unit, the access information managed by the management unit is overwritten with the provisional access information as correct information and saved. In Step S1207, the data management portion 502 deletes the provisional IP address.

In Step S1208, if the monitoring method 708 of the device is "proxy" and the management state 709 is "managed state", the task management portion 504 judges that it is a proxy aggregator and proceeds to Step S1209. Otherwise, the flow in Fig. 12 ends. In Step S1209, the task management portion 504 updates the whitelist. That is, setting is performed such that the IP address 707 of the device is permitted in the whitelist of the proxy server 501.

As described above, in Fourth Embodiment, after the provisional IP address is saved, access to the device is performed at the beginning of various tasks in the task management portion 504. Accordingly, if a combination of the provisional IP address and the identification information cannot be confirmed, a power source state event due to a change in power source state of the device is received, and a combination of the identification information included in the power source state event and the IP address is confirmed.

Accordingly, even if the power source of the device is turned off and reflection of a change in IP address cannot be confirmed through various tasks, the device can be instantly monitored as soon as the power source of the device is turned on.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the device management system or the like through a network or various storage media. Then, a computer (or a CPU, an MPU, or the like) of the device management system or the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2023-123016, filed on July 28, 2023, and Japanese Patent Application No. 2024-74964, filed on May 2, 2024, both of which are hereby incorporated by reference herein in their entirety.

## Claims

1. A device management system comprising:
network devices;
a monitoring device monitoring the network devices; and
a device management server managing data transmitted from the monitoring device,
wherein the monitoring device has at least one processor or circuit configured to function as:
an equipment search unit configured to acquire identification information for each of the network devices using access information of the network devices connected to a network,
a management object reception unit configured to acquire the identification information and the access information of the network devices that are management objects from the device management server,
a management unit configured to manage the identification information and the access information of the network devices,
a first judgment unit configured to determine that the identification information managed by the management unit matches the identification information acquired by the management object reception unit and the access information managed by the management unit does not match the access information acquired by the management object reception unit,
a second judgment unit configured to judge whether or not the identification information acquired by the equipment search unit using the access information acquired by the management object reception unit matches the identification information of the network device acquired by the management object reception unit, and
a first updating unit configured to update the access information of the network device managed by the management unit if it is judged that the access information of the same network device does not match as a result of judgment by each of the first judgment unit and the second judgment unit, and
the network device has at least one processor or circuit configured to function as:
a transmission unit configured to transmit data of the network device to the monitoring device in order to transmit the data to the device management server.

2. The device management system according to claim 1,
wherein the at least one processor or circuit of the monitoring device is further configured to function as a second updating unit configured to update an access permission list of the network devices with respect to a proxy server when the access information is updated by the first updating unit.

3. The device management system according to claim 2,
wherein if the second judgment unit judges that identification information does not match, the access information acquired by the management object reception unit is saved in the management unit as provisional access information.

4. The device management system according to claim 1,
wherein if communication performed with the network device using the access information managed by the management unit has failed, or if identification information acquired using the access information managed by the management unit differs from identification information managed by the management unit, identification information is acquired based on provisional access information.

5. The device management system according to claim 4,
wherein if the identification information acquired based on the provisional access information matches identification information managed by the management unit, the provisional access information is overwritten onto the access information managed by the management unit and saved.

6. The device management system according to claim 1,
wherein if the second judgment unit determines that the identification information does not match, a user is notified that the access information is inappropriate.

7. The device management system according to claim 2,
wherein if the network devices are being monitored without utilizing a function of a proxy server, the access permission is not updated.

8. A device management method for controlling a device management system having network devices, a monitoring device monitoring one or more of the network devices, and a device management server managing data transmitted from the monitoring device, the device management method comprising:
an equipment searching step of acquiring identification information for each of the network devices using access information of the network devices connected to a network,
a management object receiving step of acquiring the identification information and the access information of the network devices that are management objects from the device management server,
a managing step of managing the identification information and the access information of the network devices,
a first judging step of determining that the identification information managed in the managing step matches the identification information acquired in the management object receiving step and the access information managed in the managing step does not match the access information acquired in the management object receiving step,
a second judging step of judging whether or not the identification information acquired in the equipment searching step using the access information acquired in the management object receiving step matches the identification information of the network device acquired in the management object receiving step, and
a first updating step of updating the access information of the network device managed in the managing step if it is judged that the access information of the same network device does not match as a result of judgment in each of the first judging step and the second judging step, performed by the monitoring device; and
a transmitting step of transmitting data of the network device to the monitoring device in order to transmit the data to the device management server, performed by the network device.

9. A monitoring device capable of communicating with a device management server and including a function of a proxy server, the monitoring device comprising:
at least one processor or circuit configured to function as:
a management unit configured to manage combinations of identification information and access information of network devices as first information;
a reception unit configured to receive second information including combinations of identification information and access information of network devices that are to be management objects from the device management server;
an acquisition unit configured to acquire, if identification information matching identification information included in the first information is included in the second information and access information that will become combinations of the identification information in each of the first information and the second information does not match, identification information from network devices via a network using the access information that will become combinations of the identification information in the second information; and
an updating unit configured to update, if the identification information in the second information matches identification information acquired from the network device, the first information using the identification information,
wherein the updating unit updates an access permission list of the network devices for permitting access to the proxy server using the access information that will become combinations of the identification information in the second information after the first information is updated.

10. The monitoring device according to claim 9,
wherein if the network devices are monitored by the monitoring device without utilizing a function of the proxy server, the access permission list is not updated after the first information is updated.

11. The monitoring device according to claim 9,
wherein the identification information is serial numbers that are information for uniquely identifying network devices.

12. A method in a monitoring device capable of communicating with a device management server and including a function of a proxy server and a management unit configured to manage combinations of identification information and access information of network devices as first information, the method comprising:
receiving second information including combinations of identification information and access information of network devices that are to be management objects from the device management server;
acquiring, if identification information matching identification information included in the first information is included in the second information and access information that will become combinations of the identification information in each of the first information and the second information does not match, identification information from network devices via a network using the access information that will become combinations of the identification information in the second information; and
updating, if the identification information in the second information matches identification information acquired from the network device, the first information using the identification information,
wherein in the updating, an access permission list of the network devices for permitting access to the proxy server is updated using the access information that will become combinations of the identification information in the second information after the first information is updated.

13. A non-transitory computer-readable storage medium configured to store a computer program comprising instructions for executing following processes:
managing combinations of identification information and access information of network devices as first information;
receiving second information including combinations of identification information and access information of network devices that are to be management objects from the device management server;
acquiring, if identification information matching identification information included in the first information is included in the second information and access information that will become combinations of the identification information in each of the first information and the second information does not match, identification information from network devices via a network using the access information that will become combinations of the identification information in the second information; and
updating, if the identification information in the second information matches identification information acquired from the network device, the first information using the identification information, performed by a monitoring device capable of communicating with a device management server and including a function of a proxy server,
wherein during the updating, an access permission list of the network devices for permitting access to the proxy server is updated using the access information that will become combinations of the identification information in the second information after the first information is updated.
